# EUROPÄISCHE PATENTSCHRIFT

(11) **EP 0 806 538 B1**
(45) Veröffentlichungstag und Bekanntmachung des Hinweises auf die Patenterteilung: **06.12.2000**
(21) Anmeldenummer: 97250154.8
(22) Anmeldetag: 09.05.1997
(51) Int. Cl.: E05F 15/16, E05F 15/00, E05F 11/48

(54) **Motorisch angetriebener Fensterheber mit elektronischem Einklemmschutz für ein Kraftfahrzeug**
Motor-driven window lifter with anti-nipping device for a vehicle
Lève-vitre à moteur avec dispositif anti-pincement pour véhicule automobile

(30) Priorität: 10.05.1996 DE 19618853
(43) Veröffentlichungstag der Anmeldung: 12.11.1997
(73) Patentinhaber: Brose Fahrzeugteile GmbH & Co. KG, 96450 Coburg (DE)
(72) Erfinder: Lieb, Hans-Dieter, 96271 Grub am Forst (DE); Eberlein, Andre, 96450 Coburg (DE); Friedrich, Michael, 96450 Coburg (DE); Seeberger, Jürgen, 96148 Baunach (DE)
(74) Vertreter: Müller, Wolfram Hubertus, Dipl.-Phys.

(56) Entgegenhaltungen:
- EP-A- 0 604 272
- FR-A- 2 693 535

## Beschreibung

Die Erfindung betrifft einen motorisch angetriebenen Fensterheber mit elektronischem Einklemmschutz gemäß dem Oberbegriff des Patentanspruchs 1. Sie ist besonders vorteilhaft für relativ starr ausgebildete Verstellsysteme anwendbar.

Aufgrund der ständig steigenden Anforderungen an die passive Sicherheit von Kraftfahrzeugen verstärkt sich auch die Stabilität der Fahrzeugtüren, zum Beispiel durch den Einbau zusätzlicher Verstrebungen zum Abbau von Energien aus einem Seitenaufprall. Dies hat auch Auswirkungen auf die Elastizität von Verstellsystemen für die Fensterscheiben. Mit schwindender Elastizität erhöhen sich die Belastungen beim Erreichen des oberen oder unteren Anschlags der Fensterscheibe, womit ein erhöhter Materialverschleiß sowie eine zunehmende Verletzungsgefahr im Einklemmfalle verbunden ist.

Grundsätzlich kann die Elastizität eines Verstellsystemes erhöht werden, indem im Kraftfluß ein Federelement eingebaut wird. Aus US 4,970,827 ist ein Seilfensterheber mit einer an der Unterkante der Fensterscheibe befestigten Montageschiene bekannt, die die Antriebseinheit, bestehend aus Elektromotor und Getriebe mit mehrstufiger Seiltrommel zum Aufwickeln mehrerer Seile, trägt. Weiterhin sind in den äußeren Bereichen der Montageschiene Umlenkrollen vorgesehen, über welche jeweils ein Seil zwischen seinen ersten Befestigungspunkt nahe der unteren Kante des Türschachts und seinem zweiten Befestigungspunkt an der Seiltrommel geführt ist. Ein drittes Seil, das ebenfalls mit einem Bereich der Seiltrommel in Verbindung steht, ist mit dem anderen Ende in der Nähe des Türbodens unter Zwischenschaltung einer Zugfeder befestigt. Wird die Seiltrommel nun in die eine Richtung gedreht, in der sich die beiden im oberen Bereich der Tür befestigten Seile verkürzen und somit die Fensterscheibe anheben, so wird das unten eingehängte Seil im gleichen Maße abgewickelt und somit verlängert. In der umgekehrten Drehrichtung verlängern sich die beiden oberen Seile und die Fensterscheibe senkt sich, während sich das untere Seil verkürzt. Die voran bezeichnete Zugfeder dient der Aufrechterhaltung einer Mindestspannung im Verstellsystem des Fensterhebers. Beim Erreichen des oberen Anschlags der Fensterscheibe oder im Falle des Einklemmens einer Person kann die Feder keinen Beitrag zur Entlastung des Verstellsystems leisten, weil der ihr zugeordnete Seilabschnitt bei einer Aufwärtsbewegung der Fensterscheibe von dem zugeordneten Seiltrommelabschnitt abgewickelt wird.

Einen doppelsträngigen Seilfensterheber mit jeweils einem Anschlag an den auf Führungsschienen verschiebbar gelagerten Mitnehmern beschreibt die DE 39 25 864 C2. Der Anschlag, der beim Erreichen der Schließposition der Fensterscheibe zuerst wirksam wird, steht mit einem Gehäuse des Mitnehmers in Verbindung, in dem eine Feder angeordnet ist. Hat der andere Mitnehmer noch nicht die Schließposition erreicht, so wird durch eine Komprimierung der Feder ausreichend Seillänge für den noch erforderlichen Verstellweg zur Verfügung gestellt.

Der beschriebene doppelsträngige Seilfensterheber ist zwar auch bei seiner Verwendung in einer relativ steifen Türkonstruktion in der Lage, beim Einklemmen eines harten Gegenstandes oder Körperteils (zum Beispiel Kopf) den für den Erkennungsprozeß notwendigen "inneren Verstellweg" noch bereitzustellen, jedoch mit dem Nachteil, daß die Einklemmkraft bis zum Reversieren der Fensterscheibe noch erheblich ansteigen wird. Der gesamte von der Feder zur Verfügung gestellte Weg ist mit einem stetigen Kraftanstieg verbunden, wobei der Weg mit abnehmender Geschwindigkeit zurückgelegt wird. Dadurch kommt es zu einer relativen Erhöhung der Einklemmzeit, wodurch sich wiederum das Risiko für den Grad der Verletzungen erhöht; auch der subjektiv empfundene Schmerz vergrößert sich.

Aus DE 34 38 255 C1, DE 40 15 774 A1 und FR 2 584 469 A1 sind Anordnungen elastisch deformierbarer Elemente auch an anderen Stellen im Kraftfluß eines Seilfensterhebers bekannt. Diese Elemente dienen jedoch ausschließlich zur Dämpfung eines vom Antrieb ausgehenden Antriebsimpulses bzw. dem Straffhalten des Seils und dem Ausgleich von Seillängungen. Im Zusammenwirken mit einer Einklemmschutzvorrichtung für ein vergleichsweise starres Verstellsystem sind die beschriebenen Lösungen nicht geeignet, das Verletzungsrisiko in dem erforderlichen Maße zu reduzieren.

Die FR 2 693 535 beschreibt einen einsträngigen Seilfensterheber mit einem elektromotorischen Antrieb, der das über Umlenkrollen geführte Seil antreibt. Eine Umlenkrolle ist an einem verschwenkbaren, mit einem Schalter verbundenen Hebel gelagert, der über eine Feder an einem Auflager abgestützt ist. Die Feder hält den Hebel und die Umlenkrölle in einer festgelegten Position und bei Aufbrigen einer außerordentlichen Kraft auf die Fensterscheibe wird die Umlenkrolle verschwenkt und der Schalter betätigt, der wiederum ein Abschalten oder Reversieren des Antriebes auslöst. Nach Wegfall der Kraft wird die Umlenkrolle durch die Feder in ihre Ausgangsposition verschwenkt.

Der Erfindung liegt die Aufgabe zugrunde, einen motorisch angetriebenen Fensterheber mit elektronischem Einklemmschutz für Kraftfahrzeuge zu entwickeln, der auch bei vergleichsweise starren Verstellsystemen eine sichere Einklemmerkennung gewährleistet, wobei die Einklemmkraft und die Einklemmzeit im Vergleich zu bekannten technischen Lösungen verringert sein soll. Darüber hinaus soll die Erfindung einen einfachen Aufbau aufweisen und unabhängig vom Konstruktionsprinzip des Fensterhebers einsetzbar sein.

Erfindungsgemäß wird die Aufgabe durch die kennzeichnenden Merkmale des Patentanspruchs 1 gelöst. Die abhängigen Ansprüche geben Vorzugsvarianten der Erfindung an.

Demnach ist die im Kraftfluß eines Fensterhebers zwischen der motorischen Antriebseinheit und der Fensterscheibe angeordnete Feder im Sinne einer Sicherheitsfeder eingesetzt und sie besitzt eine degressive Federkennlinie, vorzugsweise eine Federkennlinie mit einem Bereich negativen Kraft-Weg-Verlaufs. Die Blockkraft der Feder, also die Stützkraft, die die Feder bei Ausnutzung des maximal zur Verfügung stehenden Deformationsweges aufbringt, soll höchstens der Summe aus der zu erwartenden Verstellkraft und der zulässigen Einklemmkraft entsprechen.

So wird sichergestellt, daß im Einklemmfall dieser Zustand auch dann von der Auswerteelektronik erkannt wird, wenn das Fensterhebersystem so starr ausgebildet ist, daß eine hinreichende, aus der Systemelastizität resultierende (Nachlauf-)Bewegung zur Signalgenerierung nicht mehr gewährleistet ist. Darüber hinaus gewährleistet der degressive beziehungsweise negative Federkennlinienverlauf der etwa mit Verschiebekraft vorgespannten Sicherheitsfeder, daß sich im Einklemmfall der Anstieg der Federkennlinie verringert, wodurch die Einklemmkraft herabgesetzt ist. Gleichzeitig führt dies im Vergleich zum bekannten Stand der Technik zu einem schnelleren Erreichen des Punktes, an dem der Kollisionszustand von der Sensorik/Elektronik erkennbar ist. Dies wiederum hat eine Verringerung der Einklemmzeit zur Folge. Insgesamt ist also das Verletzungsrisiko herabgesetzt und die subjektiv empfundene Beeinträchtigung weniger stark ausgeprägt.

Vorzugsweise sollte eine Sicherheitsfeder mit einem Bereich negativer Federkennlinienverlaufs eingesetzt werden. Das heißt, daß sie wenigstens einen Bereich besitzt, in dem die Federkraft bei fortschreitender Federdeformation abnimmt. Solche Federn sind als Blattfedern mit einem dreidimensionalen Verformungungsbereich ausbildbar und unter dem Synonym "Knackfrosch-Feder" bekannt. Ihre Federkennlinie steigt zunächst monoton bis zum Erreichen eines Maximums an, bei fortschreitender Deformation sinkt die Federkraft auf ein Minimum ab, um dann wiederum anzusteigen. Diese Eigenschaft führt beim Anlegen einer äußeren Kraft dazu, daß bei Überschreiten des Maximums ein bestimmter Deformationsweg schlagartig durchschritten wird. Der Deformationsweg wird bei der Erfindung durch einen Anschlag begrenzt.

Den genannten Effekt macht sich die Erfindung in einer Vorzugsvariante zunutze. Dazu wird die Feder mit der negativen Kennlinie so ausgelegt, daß ihr Federkraftmaximum etwa mit der maximal zu erwartenden Verschiebekraft für die Fensterscheibe zusammenfällt. Ihre Vorspannkraft im Gehäuse wird gleichfalls etwa auf die maximale Verschiebkraft eingestellt, vorzugsweise auf einen Wert, der bereits etwas jenseits des Maximums im Bereich der negativ verlaufenden Federkennlinie liegt. Auch die Blockkraft, das heißt die Federkraft, die bei maximaler Federdeformation (beim Erreichen des gehäuseseitigen Anschlags) erreicht wird, soll ebenfalls kleiner oder gleich der zu erwartenden Verstellkraft sein. Idealerweise liegt die Blockkraft im negativen Bereich der Federkennlinie unterhalb der Vorspannkraft. Sollte der in diesem Bereich zur Verfügung stehende Federweg nicht ausreichen, um eine Einklemmerkennung zu gewährleisten, so kann die Blockkraft auch auf einen Wert bis zum Erreichen der Verschiebekraft der Fensterscheibe angehoben werden.

Der Vorteil der beschriebenen Vorzugsvariante besteht darin, daß die Feder beim Überschreiten des Maximums der Federkennlinie beziehungsweise beim Erreichen der Vorspannkraft schlagartig den gesamten Weg zwischen den beiden Gehäuseanschlägen frei gibt, ohne daß es dabei zu einem Kraftanstieg im Verstellsystem kommt. In dem Falle, wo die Blockkraft im Minimum der Federkennlinie liegt, kann es sogar während des Einklemmens eines Objekts und vor dem Erkennen dieses Zustandes zu einer erheblichen Reduzierung der Einklemmkraft kommen.

Beim Einsatz einer Feder mit degressiver Federkennlinie sollte diese einen steiler ansteigenden ersten Bereich und einen sich daran anschließenden vergleichsweise flacheren Bereich aufweisen, wobei die gewählte Vorspannkraft im Knickbereich oder dahinter im flacher verlaufenden Bereich der Federkennlinie liegen sollte. Bei diesem Federtyp kann der voranbeschriebene Schalteffekt zwar nicht auftreten, es kommt aber im Vergleich zum bekannten Stand der Technik dennoch zu einer Verkürzung der Einklemmzeit und zu einer Verringerung der Einklemmkraft.

Die Erfindung kann unabhängig vom Typ eines Fensterhebers eingesetzt werden; die Feder muß lediglich zwischen zwei Kraftübertragungselementen im Kraftfluß des Fensterhebers angeordnet sein.

In Seilfensterhebern bieten sich die Seilausgänge von Umlenkstücken oder des Getriebegehäuses oder der auf der Führungsschiene lagernde Mitnehmer als Orte zur Einbindung der erfindungsgemäßen Sicherheitsfeder an. Es ist natürlich auch denkbar, eine Lagerstelle einer Seilrolle derart begrenzt verschiebbar und federbelastet zu gestalten, daß sich die effektive Seilschlaufe beim Überschreiten einer einstellbaren Vorspannkraft verkürzt. Beim Armfensterhebern bietet es sich an, den Antriebshebel an seiner grundplattenseitigen Lagerstelle oder im Kreuzgelenk (falls ein Kreuzarm-Fensterheber vorgesehen ist) zu teilen und die beiden Armteile zueinander begrenzt schwenkbar auszubilden, wobei der Schwenkbereich für in Schließrichtung wirkende Kräfte wirksam ist und die erfindungsgemäße Feder die Armteile des Antriebshebels mit einer Vorspannkraft verspannt.

Darüber hinaus besteht die Möglichkeit, die Sicherheitsfeder im Bereich der Antriebseinheit anzuordnen. Soweit zwischen dem Antriebsgetriebeelement (z.B. ein Schneckenrad, das mit der Antriebsschnecke eine Elektromotors kämmt) und einem Abtriebsgetriebeelement (z.B. eine Seiltrommel oder ein Ritzel für ein Zahnsegment) zur Kraftübertragung ein klauenartiger Eingriff vorgesehen ist, kann die Sicherheitsfeder auch zwischen diesen Klauen angeordnet werden. Somit stehen die beiden Getriebeelemente in Umfangsrichtung unter Vorspannung. Es versteht sich von selbst, daß bei der Dimensionierung der Feder die Übersetzungsbedingungen des Getriebes berücksichtigt werden müssen.

Ausführungsbeispiele der Erfindung werden anhand der Zeichnungen näher erläutert. Es zeigen:
- Figur 1: Schematische Darstellung eines Gehäuses mit einer Sicherheitsfeder mit degressiver Federkennlinie und mit einer auf einer Führungshülse gelagerten Feder zum Ausgleich der Seillängung;
- Figur 2a: schematische Darstellung eines Gehäuses mit einer Sicherheitsfeder, mit negativer Federkennlinie vor dem Überschreiten der Vorspannkraft;
- Figur 2b: wie Figur 2a, jedoch nach dem Überschreiten der Vorspannkraft;
- Figur 3: schematische Darstellung eines einsträngigen Seilfensterhebers mit angefederter Umlenkrolle;
- Figur 4: schematische Darstellung eines einsträngigen Seilfensterhebers mit in den Mitnehmer integrierter Sicherheitsfeder;
- Figur 5: schematische Darstellung eines doppelsträngigen Seilfensterhebers mit in das Getriebegehäuse beziehungsweise in den Seilausgang der Seilumlenkung integrierter Sicherheitsfeder;
- Figur 6: perspektivische Darstellung eines Mitnehmers mit aufgesetzter Nippelkammer und Sicherheitsfeder;
- Figur 7: Querschnitt durch eine Antriebsstufe mit klauenartigen Kraftübertragungselementen für einen Seilfensterheber;
- Figur 8a: Ausschnitt eines Querschnitts durch den Klauenbereich mit vorgespannter Sicherheitsfeder vor dem Überschreiten der Vorspannkraft;
- Figur 8b: wie Figur 8a, jedoch nach dem Überschreiten der Vorspannkraft;
- Figur 9a: schematische Darstellung eines Kreuzarmfensterhebers mit in der Schwenkachse des Antriebhebels geteiltem Hebelarm;
- Figur 9b: schematische Darstellung eines Kreuzarmfensterhebers mit im Kreuzgelenk geteilten Hebelarm;
- Figur 10: Darstellung unterschiedlicher Typen von Federkennlinien.

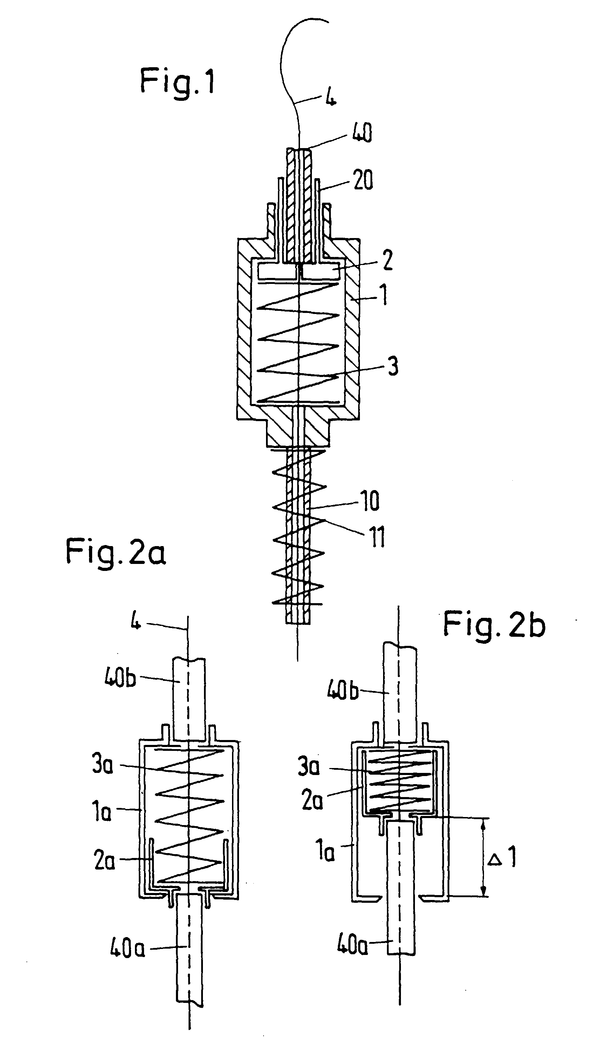

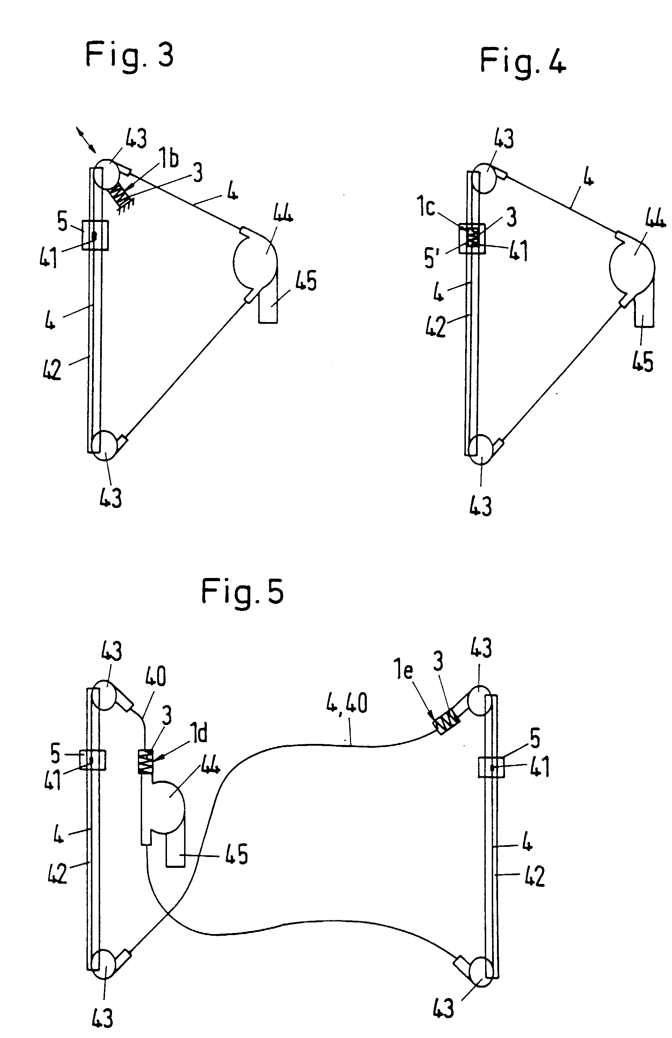

Die in Figur 1 schematisch dargestellte Ausführungsvariante der Erfindung ist für einen Bowdenrohr-Fensterheber vorgesehen, wobei das Gehäuse 1 mit seiner Führungshülse 10 direkt einem Seilumlenkstück 43 oder einem Seilausgang des Getriebes 44 zugeordnet sein soll (siehe hierzu auch Figur 5). Im Inneren des Gehäuse 1 lagert ein kolbenartiges Schubelement 2 mit einer angeformten Hülse 20, die zur Führung und zur Aufnahme des Endes eines Bowdenrohres 40 dient. Zwischen dem Schubelement 2 einerseits und der gegenüberliegenden Gehäusewandung andererseits lagert eine vorgespannte Sicherheitsfeder 3. Sie kann eine degressive Federkennlinie aufweisen und besitzt wenigstens eine Vorspannung, die der zu erwartenden Verstellkraft entspricht. Bei der Festlegung der Verstellkraft sollten keine extremen Bedingungen (zum Beispiel festgefrorene Fensterscheibe) zugrunde gelegt werden, da sonst die zulässige Einklemmkraft unter Normalbedingungen überschritten würde.

In der dargestellten Position des Schubelements 2, also bei gestreckter Feder 3, liegt die Abstützkraft des Bowdenrohres 40 unterhalb der Vorspannkraft der Feder 3. Beim Überschreiten der Vorspannkraft wird die Feder 3 komprimiert, was faktisch einer Verkürzung des Bowdenrohres 40 entspricht. Somit steht dann dem Antrieb eine adäquate Länge des Seils 4 zur Verfügung, der als "Pseudoweg" die Voraussetzung zur Signalgenerierung und somit zur Erkennung einer Einklemmsituation schafft, wenn das Fensterhebersystem praktisch als starr anzusehen ist.

Sämtliche in den Darstellungen verwendeten Sicherheitsfedern sind als Symbole für Federn mit degressiven oder negativen Federkennlinienverläufen aufzufassen. Sie geben keine konstruktive Ausbildung an.

Auch die in den Figuren 2a und 2b gezeigte Ausführungsform ist für Bowdenrohrfensterheber vorgesehen und weist eine im Gehäuse 1a angeordnete Sicherheitsfeder auf, die sich mit einem Ende am kolbenartigen Schubelement 2a abstützt. Die Bowdenrohre 40a, 40b sind in die Aufnahmeenden des Schubelements 2a beziehungsweise des Gehäuses 1a eingesetzt.

Es soll eine Sicherheitsfeder 3a mit einer Federkennlinie mit einem negativen Kraft-Weg-Verlauf zur Anwendung kommen, wobei die Vorspannkraft in dem Federkennlinienbereich mit negativem Anstieg liegt. Die Blockkraft wurde so gewählt, daß sie kleiner als die Vorspannkraft ist. Unter der Blockkraft soll die Federkraft verstanden werden, die die Sicherheitsfeder 3a bei maximaler Deformation, also nach der Zurverfügungstellung des maximalen Verstellweges, ausübt.

Wenn die Stützkraft der Bowdenrohrenden 40a, 40b die Vorspannkraft überschreitet, wird das Schubelement 2a schlagartig gegen die gegenüberliegende Wandung des Gehäuses 2a verschoben. Der Verstellweg Δ₁ entspricht der Seillänge, die von der Antriebseinheit unmittelbar aufgewickelt werden kann. Von der Höhe (axialen Ausdehnung) des topfförmigen Schubelements 2a wird die Stauchung der Feder 3 und somit ihre Blockkraft bestimmt. Der in Figur 2a dargestellte Zustand kann erst wieder erreicht werden, wenn die Stützkraft der Bowdenrohrenden 40a, 40b unter die Vorspannkraft abfällt.

Die voranstehend beschriebenen Prinzipien können in unterschiedlichen Fensterhebertypen und an verschiedenen Stellen für den erfindungsgemäßen Zweck eingesetzt werden.

In Figur 3 ist schematisch der Aufbau eines einsträngigen Seilfensterhebers dargestellt. Er besteht im wesentlichen aus einer Führungsschiene 42 mit Seilumlenkungen 43 an den Enden und einem aus einer Seiltrommel-Getriebe-Einheit 44 und einem Elektromotor 45 bestehenden Antrieb. Über die Seiltrommel-Getriebe-Einheit 44 und die beiden Seilumlenkungen 43 ist eine geschlossene Seilschlaufe 4 geführt, die fest mit einem auf der Führungsschiene 42 verschiebbar gelagerten Mitnehmer 5 verbunden ist. Vom Mitnehmer 5 wird bei angetriebener Seilschlaufe 4 eine (nicht dargestellte) Fensterscheibe angehoben oder abgesenkt. Durch den in Figur 3 dargestellten Pfeil soll angedeutet werden, daß die obere Seilumlenkung 43 derart verschiebbar gelagert ist, daß eine Positionsveränderung zu einer Veränderung der effektiven Länge der Seilschlaufe 4 führen wird. In Verschieberichtung der Seilumlenkung 43 wirkt eine vorspannte Feder 3 in einem Gehäuse 1b. Bei Auftreten einer hinreichend großen Seilspannung wird die Feder 3 komprimiert und gibt einen entsprechenden Verstellweg für die Seilumlenkung 43 frei. Dadurch wird der Umschlingungsweg der Seilschlaufe 4 verkürzt und der Antrieb kann einen weiteren Seilabschnitt aufwickeln, obwohl der Mitnehmer 5 und die Fensterscheibe nicht weiter angehoben werden.

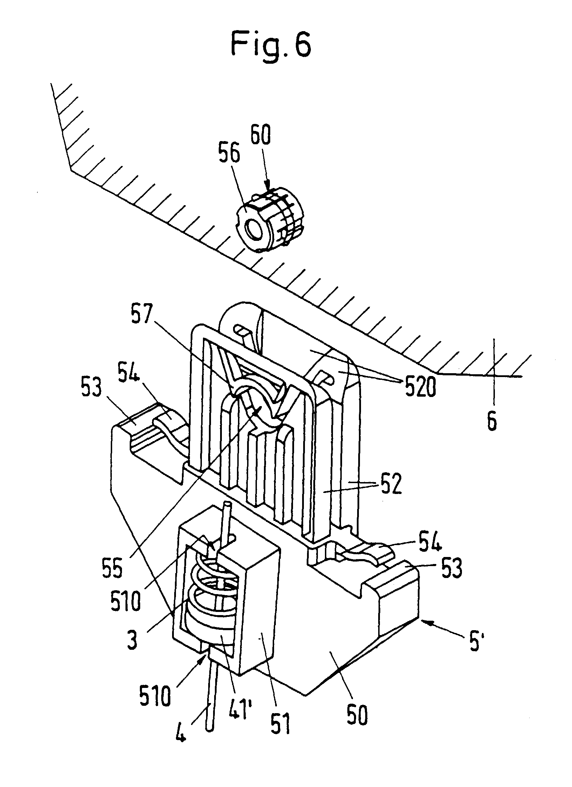

Figur 4 zeigt ebenfalls einen einsträngigen, schematisch dargestellten Seilfensterheber. Er verwendet einen speziellen Mitnehmer 5', der im Bereich der Nippelkammer ein Gehäuse 1c zur Aufnahme der Sicherheitsfeder 3 ausbildet. Ein konkretes Beispiel hierfür zeigt Figur 6. Der Mitnehmer 5' besteht im wesentlichen aus dem Grundkörper 50, dem lateral angeformten Gehäuse 51 zur Aufnahme von Seilnippel 41' und Sicherheitsfeder 3, sowie den sich in Verschieberichtung erstreckenden Haltebacken 52. Die Haltebacken 52 besitzen einen Abstand von etwa der Dicke der Fensterscheibe 6 und weisen an ihren freien Enden jeweils ein Spreizelement 57 mit innenliegenden Einführungsschrägen 520 sowie einer Rastöffnung 55 zur Aufnahme eines Rastelements 56 auf. Das Rastelement 56 ist in ein Scheibenloch 60 eingesteckt und drückt die Spreizelemente 57 beim Einführungen des Rastelements 56 über die Einführungsschrägen 520 auseinander bis dieses die zugeordnete Rastöffnung 55 erreicht hat. Dann übergreifen die Spreizelemente 57 die obere Kontur des Rastelements 56 und sichern die Verbindung zwischen Fensterscheibe 6 und Mitnehmer 5'. Darüber hinaus sind am Mitnehmer 5' Anschläge 53 zur Aufnahme von in Hubrichtung auftretenden Kräften und Federelemente 54 zum Spielausgleich vorgesehen.

Der Seilnippel 41' ist als Stützplatte für die Sicherheitsfeder 3 ausgebildet. Er ist fest mit dem Seil 4 verbunden, das das Gehäuse 51 durch die Schlitze 510 durchgreift. Das andere Ende der erfindungsgemäß vorgespannten Sicherheitsfeder 3 stützt sich an der oberen Innenwandung des Gehäuse 51 ab. Die als Schraubenfeder angedeutete Sicherheitsfeder 3 kann auch durch ein anderes Konstruktionsprinzip ersetzt werden, vorzugsweise durch eine Sicherheitsfeder mit einem Bereich mit negativ verlaufender Federkennlinie A.

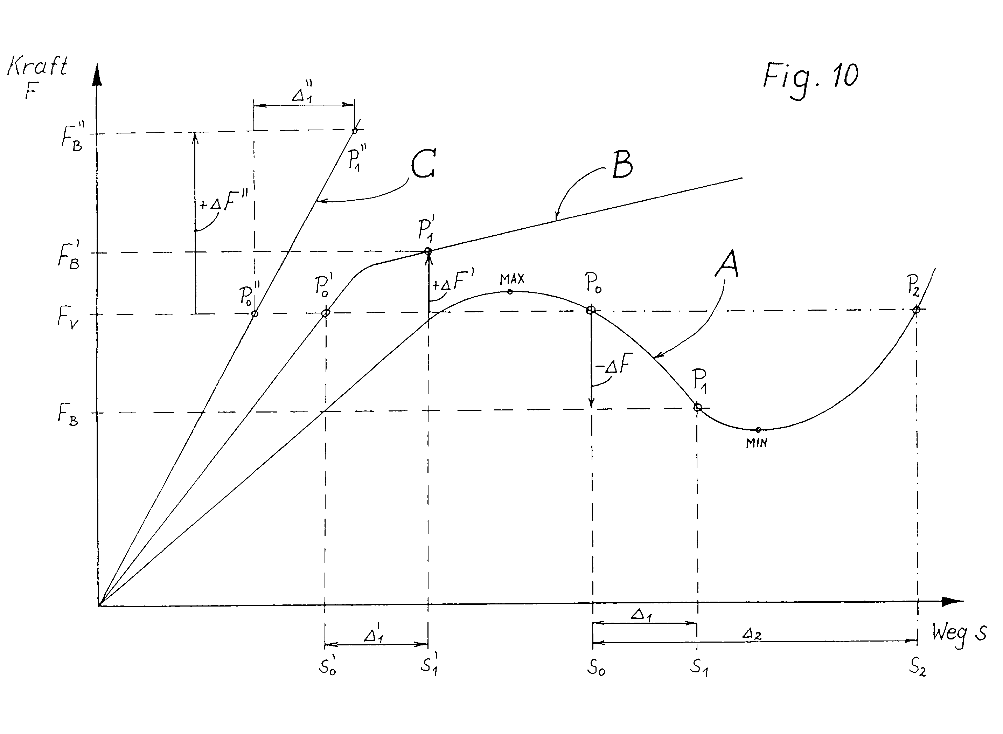

In Figur 10 sind verschiedene Federkennlinienverläufe dargestellt. Die Kurve A zeigt den für die Erfindung bevorzugten Verlauf, der im Kraft-Weg-Diagramm zunächst einen annähernd proportionalen Anstieg zeigt, der in der Nähe des Maximums in einen Abschnitt höherer Ordnung übergeht und dann monoton zu fallen beginnt, bevor sich nach dem Durchschreiten eines Minimums ein weiterer monoton steigender Kraft-Weg-Verlauf anschließt.

Idealerweise wird bei einer solchen Federkennlinie A eine Vorspannkraft F_{V} im Punkt P₀, gewählt die nach dem Maximum MAX im negativ verlaufenden Bereich zwischen MAX und MIN liegt. Die Blockkraft F_{B}, also die Federkraft bei maximal zugelassener Federdeformation, sollte auch im negativ verlaufenden Bereich noch vor dem Erreichen des Minimums MIN liegen. In diesem Falle würde beim Überschreiten der Vorspannung durch die Seilkraft am Mitnehmer 5' die (symbolisch dargestellte) Sicherheitsfeder 3 schlagartig in den Zustand des Punktes P₁ mit einer Blockkraft F_{B} wechseln, die um den Betrag -ΔF geringer ist als die Vorspannkraft F_{V} . Das heißt, die Einklemmkraft nimmt während des Einklemmzustandes nicht zu sondern ab. Gleichzeitig ändert sich der Federweg von s₀ zu s₁ um den Betrag Δ₁. Sollte der Betrag Δ₁ nicht ausreichen, um eine für die sichere Sensierung des Einklemmzustandes ausreichende Bewegung des Antriebes zuzulassen, so kann der Punkt P₁ bis zum Punkt P₂ verschoben werden, ohne daß dabei eine Erhöhung der Einklemmkraft gegenüber dem Anfangszustand auftreten würde. Der zur Verfügung stehende Federweg zwischen s₀ und s₂ beträgt nun Δ₂.

Die Vorspannkraft F_{V} im Bereich Punkt P₀ der Sicherheitsfeder 3 ergibt sich aus der Summe der zu erwartenden Verstellkraft (Verschiebekraft) am Ort der Sicherheitsfeder 3 und einer festzulegenden Sicherheitskraft, die aber die zulässige Einklemmkraft nicht überschreiten darf.

Die Kurve B des Diagramms zeigt ein Beispiel für einen degressiven Federkennlinienverlauf. Zwischen der Vorspannkraft F_{V} im Punkt P'₀ und Blockkraft F'_{B} im Punkt P'₁ liegt ein "Knickpunkt", nach dessen Überschreiten der Kraft-Weg-Verlauf wesentlich flacher wird, so daß die Kraftzunahme beim Durchschreiten des notwendigen Federweges auf einen relativen geringen Betrag von +ΔF' begrenzt bleibt. Vorteilhafter ist es jedoch, den Kurvenverlauf so anzupassen, daß schon der flachere Kurvenbereich der Federkennlinie B den Punkt P'₀ schneidet, wodurch der während des Einklemmzustandes auftretende Kraftanstieg noch etwas verringert wird.

Bisher gebräuchliche Schraubenfedern besitzen im allgemeinen eine Federkennlinie C mit proportionalem Verlauf. Bei der Zurverfügungstellung des notwendigen Reaktionsweges mit dem Betrag Δ"₁ zwischen den Punkten P"₀ und P"₁ mit der Vorspannkraft F_{V} beziehungsweise der Blockkraft F"_{B} kommt es im Vergleich zu den Federkennlinien B und C während des Einklemmprozesses zu einem erheblich größeren Kraftanstieg ΔF".

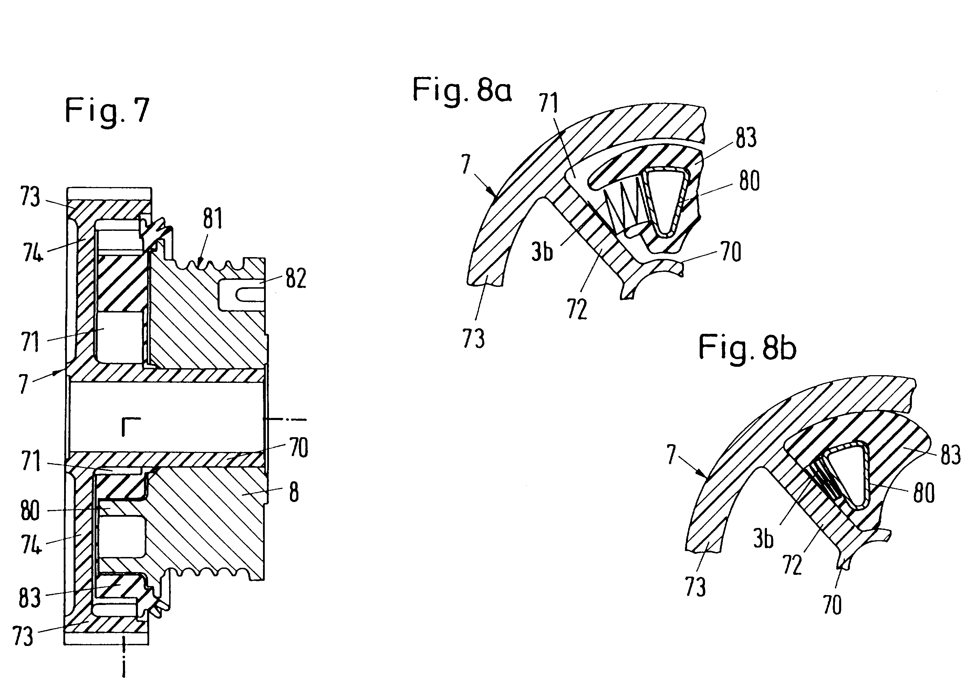

Eine weitere Möglichkeit der Anordnung der erfindungsgemäßen Sicherheitsfeder ist innerhalb des Antriebes gegeben. Die Sicherheitsfeder 3b kann beispielsweise zwischen den Anschlägen 72, 80 von klauenartig miteinander verbundenen Getriebeelementen angeordnet werden, wie dies zum Beispiel die Figuren 7 bis 8b zeigen.

Demnach weißt das Schneckenrad 7 einen äußeren Ring 73 mit einer Verzahung auf, in die eine (nicht dargestellte Antriebsschnecke) eingreift. Er steht über einen Bolzen 74 mit einem inneren, als Welle 70 ausgebildeten Ring 70 in Verbindung, worauf eine Seiltrommel 8 mit Seilrille 81 und Nippelkammer 82 lagert. Auf dem Boden 74 erheben sich speichenförmige Anschläge 72, zwischen denen in Umfangsrichtung verteilte Freiräume 71 gebildet sind. In diese Freiräume 71 greifen die Klauen 80 der Seiltrommel 8 ein.

Die Figuren 8a und 8b zeigen Querschnitte durch den Klauenbereich der beschriebenen Getriebeelemente. Gemäß Figur 8a stützt sich eine vorgespannte Sicherheitsfeder 3b einerseits an der teilweise von einem Gummidämpfer 83 ummantelten Klaue 80 und andererseits am speichenförmigen Anschlag 72 ab. Aus der Federvorspannkraft resultiert ein Drehmoment, das ausreichen sollte, die zu erwartende Verschiebekraft für die Fenstescheibe zu erzeugen. Wird die Vorspannkraft überschritten, so kommt es zur Komprimierung der Feder 3b und dabei zu einer Relativbewegung (Drehbewegung) zwischen Schneckenrad 7 und Seiltrommel 8. Die damit verbundene Drehwinkeldifferenz ermöglicht eine Weiterdrehung der Antriebsschnecke um wenigstens eine Umdrehung, was für eine Sensierung des Einklemmfalles völlig ausreichend ist.

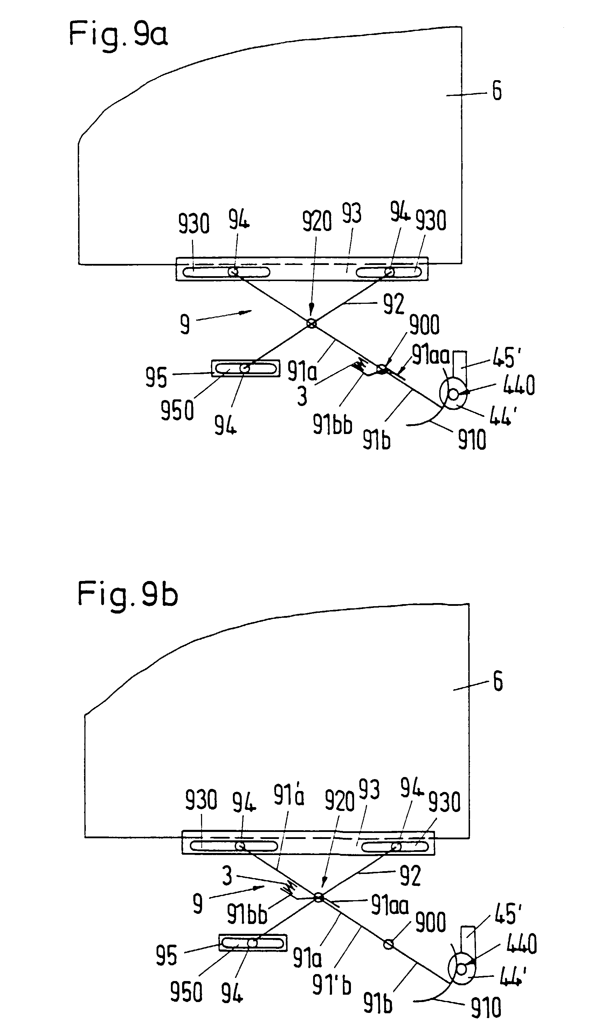

Die Erfindung läßt sich aber auch in Verbindung mit Armfensterhebern anwenden. Figur 9a zeigt die schematische Darstellung eines Kreuzarmfensterhebers 9, dessen Hebelarme 91, 92 in einem Kreuzgelenk 920 verbunden sind. Die oberen Enden der Hebelarme 91a, 92 sind mit Gleitern oder Rollen 94 ausgestattet und in den Kulissen 930 (oder Profilen) der mit der Fensterscheibe 6 verbundenen Hebeschiene 93 verschiebbar gelagert. An der Kulisse 950 der Führungsschiene 95 ist das untere Ende des Steuerarms 92 geführt. Zur Erzeugung der Verstellkraft steht eine aus Getriebe 44' und 45' bestehende Antriebseinheit zur Verfügung, deren Ritzel 440 mit der Verzahnung eines Segments 910 kämmt.

Der aus zwei Teilen 91a, 91b bestehende Antriebshebel ist in der Schwenkachse 900 auf einer (nicht dargestellten) Grundplatte gelagert. In dieser Schwenkachse 900 lagern auch die beiden Armteile 91a, 91b relativ zueinander begrenzt schwenkbar, wobei der Schwenkwinkel durch den Anschlag 91aa des Armteils 91a und den Anschlag 91bb des Armteils 91b begrenzt wird. Während der Anschlag 91aa direkt dem anderen Armteil 91b als Gegenanschlag zugeordnet ist, stützt sich zwischen dem Anschlag 91bb und dem Armteil 91a eine vorspannte Sicherheitsfeder 3 ab.

Die Vorspannung der Sicherheitsfeder 3 ist so gewählt, daß sie beim Auftreten normaler Verstellkräfte nicht deformiert wird. Erst wenn der Verschiebewiderstand der Fensterscheibe 6 dazu führt, daß die Vorspannung der Feder 3 überschritten wird, kommt es zu einem Einknicken des Antriebshebels in der Schwenkachse 900. Somit kann der Antrieb 44', 45' einen weiteren scheinbaren Verstellweg realisieren, obwohl die Fensterscheibe 6 nicht mehr verschiebbar ist.

Die Ausführungsvariante von Figur 9b entspricht im wesentlichen dem Ausführungsbeispiel von Figur 9a. Der Unterschied besteht lediglich darin, daß der Antriebshebel mit seinen Armteilen 91'a, und 91'b im Kreuzgelenk 920 geteilt ist.

### Bezugszeichenliste

- 1: Gehäuse
- 1a: Gehäuse
- 1b: Gehäuse
- 1c: Gehäuse
- 1d: Gehäuse
- 1e: Gehäuse
- 10: Führungshülse für Antriebsfeder
- 11: Ausgleichsfeder

- 2: Schubelement (Kolben)
- 2a: Schubelement
- 20: Hülse

- 3: Sicherheitsfeder
- 3a: Sicherheitsfeder
- 3b: Sicherheitsfeder

- 4: Seil
- 40: Bowdenrohr
- 40a: Bowdenrohr
- 40b: Bowdenrohr
- 41: Seilnippel
- 41': Seilnippel
- 42: Führungsschiene
- 43: Seilumlenkung
- 44: Getriebeeinheit
- 44': Getriebeeinheit
- 45: Motor
- 45': Motor
- 440: Ritzel

- 5: Mitnehmer
- 5': Mitnehmer
- 50: Grundkörper
- 51: Gehäuse/Nippelkammer
- 510: Schlitz
- 52: Haltebacke
- 520: Einführungsschräge
- 53: Anschlag
- 54: Federelement
- 55: Rastöffnung
- 56: Rastelement
- 57: Spreizelement

- 6: Fensterscheibe
- 60: Scheibenloch

- 7: Schneckenrad
- 70: Achse
- 71: Freiraum
- 72: Speiche/Klaue/Anschlag
- 73: äußerer Ring

- 8: Seiltrommel
- 80: Klaue/Anschlag
- 81: Seilrille
- 82: Seilnippelkammer
- 83: Gummidämpfer

- 9: Kreuzarmfensterheber
- 91a: Teil des Antriebshebels
- 91'a: Teil des Antriebshebels
- 91b: Teil des Antriebshebels
- 91'b: Teil des Antriebshebels
- 91aa: Anschlag
- 91bb: Anschlag
- 92: Steuerarm
- 93: Hebeschiene
- 94: Gleiter/Rolle
- 95: Führungsschiene
- 900: Schwenkachse
- 910: Zahnsegment
- 920: Kreuzgelenk
- 930: Führungsschiene
- 950: Führungsschiene

- A: Federkennlinie
- B: Federkennlinie
- C: Federkennlinie

- F_{V}: Vorspannkraft
- F_{B}: Blockkraft der Feder mit Bereich negativer Federkennlinie
- F'_{B}: Blockkraft der Feder mit Bereich degressiver Federkennlinie
- F"_{B}: Blockkraft der Feder mit Bereich proportionaler Federkennlinie

- -ΔF: Kraftabnahme der Feder mit Bereich negativer Federkennlinie
- +ΔF': Kraftzunahme der Feder mit degressiver Federkennlinie
- +ΔF": Kraftzunahme der Feder mit proportionaler Federkennlinie

- Δ₁: Wegänderung der Feder mit Bereich negativer Federkennlinie
- Δ'₁: Wegänderung der Feder mit degressiver Federkennlinie
- Δ"₁: Wegänderung der Feder mit proportionaler Federkennlinie
- Δ₂: maximale Wegänderung

- P₀: Punkt
- P₀': Punkt
- P₀": Punkt
- P₁: Punkt
- P'₁: Punkt
- P"₁: Punkt
- P₂: Punkt

- S₀: Federweg
- S'₀: Federweg
- S₁: Federweg
- S'₁: Federweg
- S₂: Federweg

## Patentansprüche

1. Motorisch angetriebener Fensterheber mit elektronischem Einklemmschutz für ein Kraftfahrzeug mit mindestens einer Feder (3, 3a, 3b) im Kraftfluß zwischen der Antriebseinheit (44, 45; 44', 45') und der Fensterscheibe (6), wobei die Feder (3, 3a, 3b)
- in einem Gehäuse (1, 1a, 1b, 1c, 1d, 1e, 51) oder dergleichen mit einer Kraft vorgespannt ist, die mindestens der zu erwartenden Verstellkraft beim Heben der Fensterscheibe (6) entspricht, und
- mit den angrenzenden Kraftübertragungselementen in Verbindung steht und
- die Feder (3, 3a, 3b) bei Überschreitung der Vorspannkraft (FV) der Antriebseinheit (44, 44', 45, 45') einen Weg (delta1, delta'1) ermöglicht, ohne daß die Fensterscheibe, während dieses Weges, angehoben wird,
**dadurch gekennzeichnet**,
daß die Blockkraft (FB, F'B) der Feder (3, 3a, 3b) maximal der Summe aus der zu erwartenden Verstellkraft und der zulässigen Einklemmkraft entspricht und daß die Federkennlinie (B, C) beim Überschreiten der Vorspannkraft (FV) einen degressiven, vorzugsweise negativen, Verlauf zeigt.

2. Fensterheber nach Anspruch 1, **dadurch gekennzeichnet**, daß bei einer degressiven Federkennlinie (B) die Vorspannkraft (FV) der Feder (3, 3a, 3b) der Summe aus der zu erwartenden Verstellkraft und einer Sicherheitskraft, die kleiner als die zulässige Einklemmkraft ist, entspricht.

3. Fensterheber nach Anspruch 1, **dadurch gekennzeichnet**, daß bei einer Federkennlinie (A) mit einem Bereich negativen Kraft-Weg-Verlaufs die Vorspannkraft (FV) der Feder (3, 3a, 3b) größer oder gleich der zu erwartenden Verstellkraft und die Blockkraft (FB) kleiner oder gleich der zu erwartenden Verstellkraft ist.

4. Fensterheber nach Anspruch 3, **dadurch gekennzeichnet**, daß die Feder (3, 3a, 3b) als Blattfeder mit einem dreidimensional verformten Bereich ausgebildet ist, so daß sie eine dem sogenannten Knackfrosch-Prinzip analoge Wirkungsweise aufweist.

5. Fensterheber nach wenigstens einem der voranstehenden Ansprüche, **dadurch gekennzeichnet**, daß die im Gehäuse (1, 1a, 1b, 1c, 1d, 1e, 51) gelagerte Feder (3, 3a, 3b) im Kraftfluß eines Seilfensterhebers mit einer geschlossenen Seilschlaufe (4) angeordnet ist, die über wenigstens zwei entlang des Verschiebeweges der Fensterscheibe (6) angeordnete Umlenkungen (43) geführt und auf eine mit der fremdkraftbetätigten Antriebseinheit gekoppelten Seiltrommel gewickelt ist, wobei der zwischen den Umlenkungen (43) vertikal geführte Seilabschnitt einen der Fensterscheibe (6) zugeordneten Mitnehmer (5, 5') trägt.

6. Fensterheber nach Anspruch 5, **dadurch gekennzeichnet**, daß zusätzlich zur im Gehäuse (1) lagernden Feder (3) Mittel zum Seillängenausgleich vorgesehen sind.

7. Fensterheber nach Anspruch 5 und 6, **dadurch gekennzeichnet**, daß zum Seillängenausgleich eine Ausgleichsfeder (11) eingesetzt wird, die sich einerseits am Gehäuse (1) der Feder (3) und andererseits an einem Seilumlenkstück (43) oder dem Seilausgang des Getriebegehäuses (44) abstützt, wobei das Gehäuse (1) der Feder (3) daran verschieblich gelagert ist.

8. Fensterheber nach Anspruch 5, **dadurch gekennzeichnet**, daß bei Verwendung eines Bowdenrohr-Fensterhebers die Feder (3) zwischen einem Ende eines Bowdenrohres (40) und der zugeordneten Abstützung eines Antriebsgehäuses (44) oder eines Seilausganges eines Seilumlenkstücks (43) angeordnet ist.

9. Fensterheber nach Anspruch 5, **dadurch gekennzeichnet**, die Feder (3) in einer Nippelkammer (lc, 51 ) des der Fensterscheibe zugeordneten Mitnehmers (5') angeordnet ist, wobei eine Anschlagfläche der Nippelkammer (1 c, 51) einerseits und der Seilnippel (41, 41') andererseits der Feder (3) als Abstützung dienen.

10. Fensterheber nach wenigstens einem der voranstehenden Ansprüche, **dadurch gekennzeichnet**, daß die Feder (3, 3a, 3b) in dem Antriebsstrang des Seiles (4) eingesetzt ist, der beim Schließen der Fensterscheibe (6) belastet wird.

11. Fensterheber nach wenigstens einen der Ansprüche 1 bis 3, **dadurch gekennzeichnet**, daß die im Gehäuse gelagerte Feder (3) im Kraftfluß eines Armfensterhebers (9) mit wenigstens einem Hebelarm (91, 92) angeordnet ist, wobei der Hebelarm (91, 92) in der Türkarosserie schwenkbar gelagert ist und mit seinem einen Ende (94) verschieblich an einer mit der Fensterscheibe (6) verbundenen Schiene (93) lagert, während das andere Ende ein bogenförmiges Zahnsegment (910) aufweist, dessen Verzahnung mit der Gegenverzahnung eines Getriebeelements (440) der fremdkraftbetätigten Antriebseinheit (44', 45') im Eingriff steht.

12. Fensterheber nach Anspruch 11 , **dadurch gekennzeichnet**, daß das Zahnsegment (910) fest mit einem Armteil (91b) verbunden ist, der mit einem dazu begrenzt schwenkbaren Armteil (91 a) einen zweiteiligen Antriebshebel bildet, wobei jeder Schwenkrichtung der Armteile (91a, 91b) Anschläge (91aa, 91bb) zur Begrenzung des Schwenkwinkels zugeordnet sind, und daß die im Kraftfluß angeordnete Feder (3) zwischen dem Anschlag (91bb) und dem Armteil (91 a) lagert.

13. Fensterheber nach Anspruch 12, **dadurch gekennzeichnet**, daß die Schwenkachse des Zahnsegements (910) mit der Schwenkachse (900) der Armteile(91a, 91b) identisch ist.

14. Fensterheber nach Anspruch 12, **dadurch gekennzeichnet**, daß die Armteile (91a, 91b) im Kreuzgelenk (910) zueinander begrenzt schwenkbar gelagert sind.

15. Fensterheber nach wenigstens einem der voranstehenden Ansprüche, **dadurch gekennzeichnet**, daß die Feder (3b) im Getriebe (44, 44') einer Antriebseinheit, z.B. zwischen den Klauen (72, 80) eines Schneckenrades (7) und einer Seiltrommel (8) oder eines Abtriebsritzels (440), angeordnet ist, wobei die Feder (3b) das Schnekkenrad (7) und die Seiltrommel (8), beziehungsweise das Abtriebsritzel (440) mit einem vorgesehenen Drehmoment zueinander vorgespannt sind.

## Claims

1. Motor-driven window lift mechanism with electronic anti-jam protection for a motor vehicle having at least one spring (3, 3a, 3b) in the force flow between the drive unit (44, 45; 44', 45') and the window pane (6) wherein the spring (3, 3a, 3b)
- is pretensioned in a housing (1, 1a, 1b, 1c, 1d, 1e, 1e, 51) or the like with a force which corresponds at least to the displacement force which is to be anticipated during the lifting of the window pane (6) and
- is connected to the adjoining force transfer elements and
- when the pretensioning force (FV) of the drive unit (44, 44', 45, 45') is exceeded the spring (3, 3a, 3b) permits a travel path (delta1, delta'1) without the window pane being raised during this travel path,
**characterised in that**
the blocking force (FB, F'B) of the spring (3, 3a, 3b) corresponds maximum to the sum of the displacement force which is anticipated and the permissible clamping force and that the spring characteristic (B, C) when the pretensioning force (FV) is exceeded shows a degressive, preferably negative course.

2. Window lift mechanism according to claim 1 **characterised in that** in the event of a degressive force characteristic (B) the pretensioning force (FV) of the spring (3, 3a, 3b) corresponds to the sum of the displacement force which is to be anticipated and a safety force which is less than the permissible clamping force.

3. Window lift mechanism according to claim 1 **characterised in that** in the case of a spring characteristic (A) with an area of negative force-path curve the pretensioning force (FV) of the spring (3, 3a, 3b) is greater than or equal to the displacement force anticipated and the blocking force (FB) is less than or equal to the displacement force which is to be anticipated.

4. Window lift mechanism according to claim 3 **characterised in that** the spring (3, 3a, 3b) is formed as a leaf spring with a three-dimensionally deformed area so that it has a method of operation similar to the so-called crackerjack principle.

5. Window lift mechanism according to at least one of the preceding claims **characterised in that** the spring (3, 3a, 3b) which is mounted in the housing (1, 1a, 1b, 1c, 1d, 1e, 51) is mounted in the force flow of a cable actuated window lift mechanism having a closed cable loop (4) which is guided over at least two pulleys (43) mounted along the displacement path of the window pane (6) and is wound on to a cable drum coupled to the external force actuated drive unit, wherein the cable section which is guided vertically between the pulleys (43) supports a follower (5, 5') which is associated with the window pane (6).

6. Window lift mechanism according to claim 5 **characterised in that** in addition to the spring (3) mounted in the housing, means are also provided for compensating the cable length.

7. Window lift mechanism according to claims 5 and 6 **characterised in that** for compensating the cable length a compensating spring (11) is used which is supported on one side on the housing (1) of the spring (3) and on the other on a cable guide member (43) or the cable outlet of the gear housing (44) wherein the housing (1) of the spring (3) is mounted displaceable thereon.

8. Window lift mechanism according to claim 5 **characterised in that** when using a Bowden tube window lifter the spring (3) is mounted between one end of a Bowden tube (40) and the associated support of a drive housing (44) or a cable outlet of a cable guide member (43).

9. Window lift mechanism according to claim 5 **characterised in that** the spring (3) is mounted in a nipple chamber (1c, 51) of the follower (5') associated with the window pane wherein a stop face of the nipple chamber (1c, 51) on one side and the cable nipple (41, 41') on the other side of the spring (3) serve as support.

10. Window lift mechanism according to at least one of the preceding claims **characterised in that** the spring (3, 3a, 3b) is inserted in the drive train of the cable (4) which is loaded during the closing of the window pane (6).

11. Window lift mechanism according to at least one of claims 1 to 3 **characterised in that** the spring (3) mounted in the housing is mounted in the force flow of an arm window lifter (9) having at least one lever arm (91, 92) wherein the lever arm (91, 92) is mounted for swivel movement in the door body and is supported by its one end (94) displaceable on a rail (93) connected to the window pane (6) whilst the other end has a curved toothed segment (910) whose teeth engage with the counter teeth of a gearing element (440) of the external force actuated drive unit (44', 45').

12. Window lifter according to claim 11 **characterised in that** the toothed segment (910) is fixedly connected to an arm part (91b) which with an arm part (91a) forms a two-part drive lever which is able to swivel a restricted amount relative thereto, wherein in each swivel direction of the arm parts (91a, 91b) there are associated stops (91aa, 91bb) to restrict the swivel angle, and that the spring (3) mounted in the force flow is supported between the stop (91bb) and the arm part (91a).

13. Window lift mechanism according to claim 12 **characterised in that** the swivel axis of the toothed segment (910) is identical with the swivel axis (900) of the arm parts (91a, 91b).

14. Window lift mechanism according to claim 12 **characterised in that** the arm parts (91a, 91b) are mounted in the cross joint to swivel restrictedly relative to each other.

15. Window lift mechanism according to at least one of the preceding claims **characterised in that** the spring (3b) is mounted in the gearing (44, 44') of a drive unit, e.g. between the claws (72, 80) of a worm wheel (7) and a cable drum (8) or an output pinion (440) wherein the spring (3b), the worm wheel (7) and the cable drum (8) or the output pinion (440) are pretensioned with a predetermined torque relative to each other.

## Revendications

1. Lève-vitre mû par un moteur et comportant un dispositif électronique anti-pincement pour un véhicule automobile, comportant au moins un ressort (3, 3a, 3b) situé dans le flux de force entre l'unité d'entraînement (44, 45; 44', 45') et le lève-vitre (6), et dans lequel le ressort (3, 3a, 3b)
- est précontraint dans un boîtier (1, la, 1b, lc, le, 51) ou analogue avec une force qui correspond au moins à la force de réglage, à laquelle il faut s'attendre, lors du soulèvement de la vitre (6), et
- est relié aux éléments adjacents de transmission de force, et
- lors du dépassement de la force de précontrainte (FV) de l'unité d'entraînement (44, 44', 45, 45'), le ressort (3, 3a, 3b) permet un déplacement (delta1, delta'1) sans que la vitre ne soit soulevée pendant ce déplacement,
caractérisé en ce
que la force (FB, F'B) du ressort (3, 3a, 3b) comprimé en un bloc correspond au maximum à la somme de la force de réglage, à laquelle il faut s'attendre, et de la force admissible de pincement, et que lors du dépassement de la force de précontrainte (FV) la courbe caractéristique (B, C) du ressort présente une allure décroissante, de préférence négative.

2. Lève-vitre selon la revendication 1, caractérisé en ce que dans le cas d'une courbe caractéristique décroissante (B) du ressort, la force de précontrainte (FB) du ressort (3, 3a, 3b) correspond à la somme de la force de réglage, à laquelle il faut s'attendre, et d'une force de sécurité, qui est inférieure à la force admissible de pincement.

3. Lève-vitre selon la revendication 1, caractérisé en ce que dans le cas d'une courbe caractéristique (A) du ressort possédant une courbe de variation force-déplacement négative, la force de précontrainte (FV) du ressort (3, 3a, 3b) est inférieure ou égale à la force de réglage, à laquelle il faut s'attendre, et la force (FB) du ressort en bloc est inférieure ou égale à la force de réglage à laquelle il faut s'attendre.

4. Lève-vitre selon la revendication 3, caractérisé en ce que le ressort (3, 3a, 3b) est agencé sous la forme d'un ressort à lame comportant une partie déformée de façon tridimensionnelle de sorte qu'il possède un mode d'action similaire à ce qu'on appelle le principe "Knackfrosch".

5. Lève-vitre selon au moins l'une des revendications précédentes, caractérisé en ce que le ressort (3, 3a, 3b) monté dans le boîtier (1, 1a, 1b, 1c, 1d, 1e, 51) est disposé dans le flux de force d'un lève-vitre à câble comportant une boucle de câble fermée (4), qui est guidée sur au moins deux éléments de renvoi (43) disposés le long du trajet de déplacement du lève-vitre (6) et est enroulé sur un tambour à câble accouplé à l'unité d'entraînement actionnée par une force extérieure, la partie du câble, qui est guidée verticalement entre les éléments de renvoi (43), portant un organe d'entraînement (5, 5') associé au lève-vitre (6).

6. Lève-vitre selon la revendication 5, caractérisé en ce que des moyens pour le compensation de la longueur du câble sont prévus en plus du ressort (3) monté dans le boîtier (1).

7. Lève-vitre selon les revendications 5 et 6, caractérisé en ce que pour la compensation de la longueur du câble on utilise un ressort de compensation (11), qui prend appui d'une part sur le boîtier (1) du ressort (3) et d'autre part sur un élément (43) de déviation du câble ou sur la sortie de câble du boîtier (44) du mécanisme, le boîtier (1) du ressort (3) étant monté de manière à être déplaçable sur le boîtier du mécanisme.

8. Lève-vitre selon la revendication 5, caractérisé en ce que dans le cas de l'utilisation d'un lève-vitre pourvu d'un tube Bowden, le ressort (3) est disposé entre une extrémité d'un tube Bowden (40) et le support associé d'un boîtier d'entraînement (44) ou une sortie de câble d'un élément (43) de déviation du câble.

9. Lève-vitre selon la revendication 5, caractérisé en ce que le ressort (3) est disposé dans une chambre à raccord fileté (1c, 51) de l'organe d'entraînement (5') associé au lève-vitre, une surface de butée de la chambre à raccord fileté (1c, 51) d'une part et du raccord fileté (41, 41') du câble d'autre part servant d'appui au ressort (3).

10. Lève-vitre selon au moins l'une des revendications précédentes, caractérisé en ce que le ressort (3, 3a, 3b) est inséré dans la chaîne cinématique du câble (4), qui est chargée lors de la fermeture du lève-vitre (6).

11. Lève-vitre selon au moins l'une des revendications 1 à 3, caractérisé en ce que le ressort (3) monté dans le boîtier est disposé dans le flux de force d'un levier (9) d'actionnement de la vitre, qui comporte au moins un bras (90, 92), le bras (90, 92) du levier étant tourillonné de manière à pouvoir pivoter dans la carrosserie de la portière et étant supporté, par l'une de ses extrémités (94), de manière à être déplaçable sur un rail (93) relié au lève-vitre (6), alors que l'autre extrémité comporte un segment denté de forme arquée (910), dont la denture est reliée à la denture antagoniste d'un élément de transmission (440) de l'unité d'entraînement (44', 45') actionnée par une force extérieure.

12. Lève-vitre selon la revendication 11, caractérisé en ce que le segment denté (910) est relié de façon fixe à un élément de bras (91b), qui forme, avec un élément de bras (91a) pouvant pivoter de façon limitée par rapport à l'élément de bras précédent, un levier d'entraînement à deux éléments, dans lequel des butées (91aa, 91bb) sont associées à chaque direction de pivotement des éléments de bras (91a, 91b) pour limiter l'angle de pivotement, et que le ressort (3) disposé dans le flux de force est monté entre la butée (91bb) et l'élément de bras (91a).

13. Lève-vitre selon la revendication 12, caractérisé en ce que l'axe de pivotement du segment denté (910) est identique à l'axe de pivotement (900) des éléments de bras (91a, 91b).

14. Lève-vitre selon la revendication 12, caractérisé en ce que les éléments de bras (91a, 91b) sont montés dans le joint de cardan (910) de manière à pouvoir pivoter de façon limitée l'un par rapport à l'autre.

15. Lève-vitre selon au moins l'une des revendications précédentes, caractérisé en ce que le ressort (3b) est disposé dans le mécanisme (44, 44') d'une unité d'entraînement, par exemple entre les ergots (72, 80) d'une roue tangente (7) et un tambour à câble (8) ou un pignon mené (440), le ressort (3b), la roue tangente (7) et le tambour à câble (8) ou le pignon mené (440) étant précontraints les uns par rapport aux autres avec un couple prévu.
